# DEMANDE DE BREVET EUROPEEN

(11) **EP 1 491 454 A1**
(43) Date de publication de la demande: **29.12.2004**
(21) Numéro de dépôt: 04291526.4
(22) Date de dépôt: 17.06.2004
(51) Int. Cl.: B65D 19/38, B65D 19/44, B62B 5/00

(54) **Dispositif de transport d'ouvrants et procédé de transport associé**

(30) Priorité: 18.06.2003 FR 0307345
(71) Demandeur: Fichet Serrurerie Bâtiment - F.S.B., 80460 Oust-Marest (FR)
(72) Inventeur: Benoit, Sylvain, 80520 Woincourt (FR); Riberolles, Benoît, 76260 Etalondes (FR)
(74) Mandataire: Thinat, Michel

(57) **Abrégé**

L'invention concerne un dispositif de transport d'ouvrants (1), comprenant une structure (10) de support de l'ouvrant (1) en position verticale ou proche de la verticale, et des moyens amovibles pour déplacer la structure de support (10).

Elle concerne également un procédé de transport de portes blindées à l'aide de ce dispositif.

## Description

L'invention concerne en général le domaine des ouvrants, notamment des ouvrants blindés.

Plus précisément, l'invention concerne selon un premier aspect un dispositif de transport d'ouvrants.

Il est connu de l'art antérieur de transporter les ouvrants couchés horizontalement sur des palettes en bois. Les palettes chargées sont déplacées à l'aide de transpalettes. L'ouvrant est généralement disposé transversalement relativement à la direction normale de déplacement du transpalette.

Ce mode de transport présente le défaut que les ouvrants ne passent pas dans des ouvertures trop étroites. L'encombrement cumulé de l'ouvrant sur la palette et du transpalette est en effet très important.

Dans ce contexte, la présente invention a pour but de pallier le défaut mentionné ci-dessus et de proposer un dispositif de transport d'ouvrants souple et d'encombrement réduit.

A cette fin, le dispositif de transport de l'invention comprend une structure de support de l'ouvrant en position verticale ou proche de la verticale, et des moyens amovibles pour déplacer la structure de support.

Dans un mode de réalisation possible de l'invention, la structure de support repose sur des profilés longitudinaux présentant chacun des extrémités longitudinales avant et arrière coupées latéralement en biseau de côtés mutuellement opposés, de telle sorte que les profilés de deux structures de support placées l'une derrière l'autre s'emboîtent.

Avantageusement, la structure de support comprend un dossier transversal et vertical ou proche de la verticale, et un profilé transversal en équerre solidaire d'une partie basse du dossier et fixé sur les profilés longitudinaux.

De préférence, le dossier comprend des tubes parallèles, et une barre d'écartement transversale solidaire des tubes.

Par exemple, le dossier de la structure de support comprend des crochets aptes à venir s'engager dans des extrémités supérieures ouvertes des tubes d'une autre structure de support, quand ladite structure de support est empilée sur ladite autre structure de support.

Avantageusement, les moyens pour déplacer la structure de support comprennent des manipulateurs à roulettes venant se loger de façon amovible dans les profilés longitudinaux, et adoptant sélectivement une configuration abaissée dans laquelle le profilé longitudinal repose sur le sol, et une configuration soulevée dans laquelle le profilé longitudinal repose sur le manipulateur.

De préférence, les profilés longitudinaux et les manipulateurs présentent des longueurs longitudinales proches.

Par exemple, chaque manipulateur comprend un profilé supérieur en U, un profilé inférieur en U s'étendant dans le profilé supérieur, des roulettes reposant sur le sol et montées pivotantes à l'intérieur du profilé inférieur, et des moyens pour déplacer sélectivement le profilé supérieur relativement au profilé inférieur entre une position basse relativement plus proche du sol correspondant à la configuration abaissée et une position haute relativement plus éloignée du sol correspondant à la configuration soulevée.

Avantageusement, les moyens pour déplacer sélectivement le profilé supérieur comprennent une branche de commande pivotante autour d'un axe transversal, cette branche s'étendant vers le haut à partir de l'axe en configuration soulevée du manipulateur et vers l'arrière à partir de l'axe en configuration abaissée du manipulateur.

Selon un second aspect, l'invention concerne un procédé de transport de portes blindées à l'aide du dispositif décrit ci-dessus, mettant en jeu les étapes successives suivantes :
1/ chargement d'une porte en position verticale sur une structure de support reposant sur le sol, les manipulateurs étant retirés ;
2/ mise en place de manipulateurs sous les profilés longitudinaux ;
3/ chargement de la structure de support dans un engin de transport en la faisant rouler sur le sol et retrait des manipulateurs ;
4/ renouvellement des étapes 1/ à 3/ jusqu'à ce que le chargement de l'engin soit terminé ;
5/ déplacement de l'engin de transport ;
6/ mise en place de manipulateurs sous les profilés longitudinaux d'une structure de support ;
7/ déchargement de la structure de support en la faisant rouler et retrait des manipulateurs ;
8/ renouvellement des étapes 6/ et 7/ jusqu'à ce que le déchargement de l'engin de transport soit terminé.

Avantageusement, l'engin de transport comprend un plancher sur lesquels des rails sont fixés, les rails coopérant avec les profilés longitudinaux des structures de support pour maintenir les structures transversalement en position.

D'autres caractéristiques et avantages de l'invention ressortiront clairement de la description qui en est faite ci-dessous, à titre indicatif et nullement limitatif, en référence aux figures annexées, parmi lesquelles :
- la figure 1 est une vue de l'arrière en perspective d'un ouvrant chargé sur une structure de support d'un dispositif de transport selon l'invention,
- la figure 2 est une vue de l'arrière en perspective de la structure de support de la figure 1 supporté par des manipulateurs à roulettes en configuration soulevée, l'ouvrant n'étant pas représenté,
- la figure 3 est une vue de côté de structures de support de la figure 1 emboîtées les une derrière les autres et superposées,
- la figure 4 est une vue de face selon la flèche IV de la figure 3,
- la figure 5 est une vue de dessous suivant la flèche V de la figure 3,
- la figure 6 est une vue en coupe longitudinale d'un manipulateur de la figure 2, en configuration abaissée,
- la figure 7 est une vue équivalente à la figure 6, le manipulateur étant représenté en configuration soulevée,
- la figure 8 est une représentation schématique en perspective de structures de support chargées dans un camion de transport, et
- la figure 9 est une vue partielle en coupe dans un plan transversal d'une variante de réalisation du rail de blocage du camion de la figure 8 et d'une structure du support.

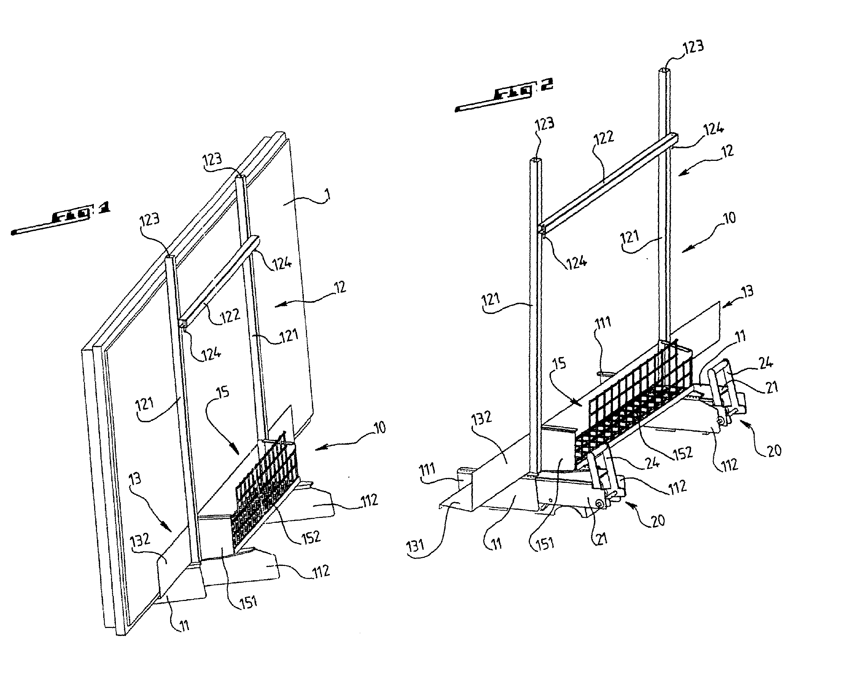

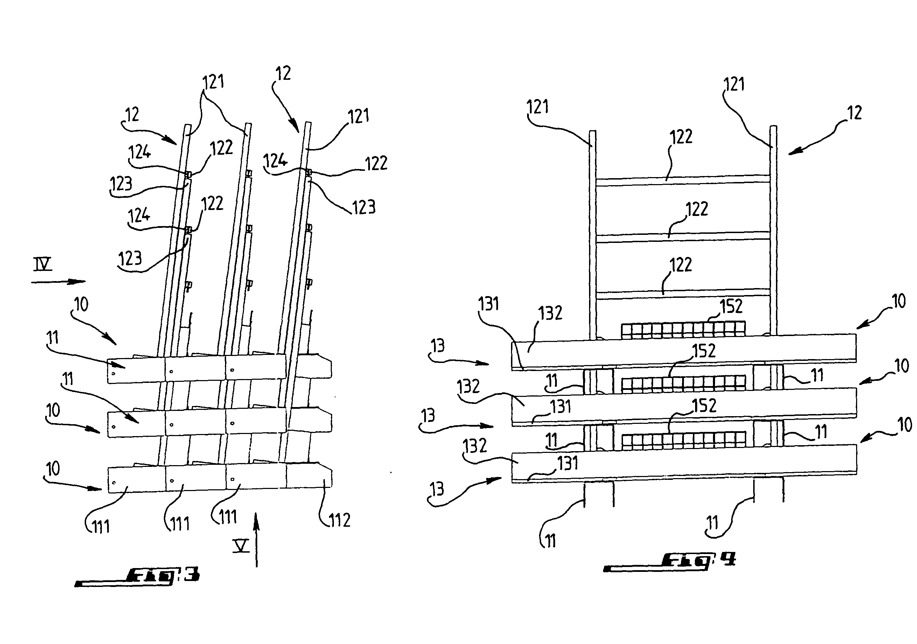

Le dispositif représenté sur la figure 2 est destiné au transport d'ouvrants 1, par exemple des portes et des fenêtres de bâtiments, et plus spécialement au transport de portes blindées, qui sont particulièrement lourdes et difficiles à manipuler.

Il comprend une structure de support 10 de l'ouvrant 1 en position verticale ou proche de la verticale, et des moyens amovibles pour déplacer la structure de support 10.

Plus précisément, la structure de support 10 repose sur deux profilés métalliques longitudinaux 11 mutuellement parallèles, un dossier 12 à la fois transversal et vertical ou proche de la verticale, et un profilé métallique transversal 13 en équerre solidaire d'une partie basse du dossier 12 et fixé sur les profilés longitudinaux 11.

Les profilés longitudinaux 11 présentent chacun une section en U dans un plan perpendiculaire à la direction longitudinale. Ces profilés présentent chacun une face inférieure ouverte normalement tournée vers le sol, et une face supérieure pleine, plate, opposée à la face inférieure.

Le profilé transversal 13 en L comprend une première aile 131, horizontale ou proche de l'horizontale, rigidement fixée sur les faces supérieures des profilés longitudinaux 11, et une seconde aile 132 verticale ou proche de la verticale, sensiblement perpendiculaire à la première, solidaire du dossier 12.

La seconde aile 32 s'étend d'un côté arrière de la première aile 31.

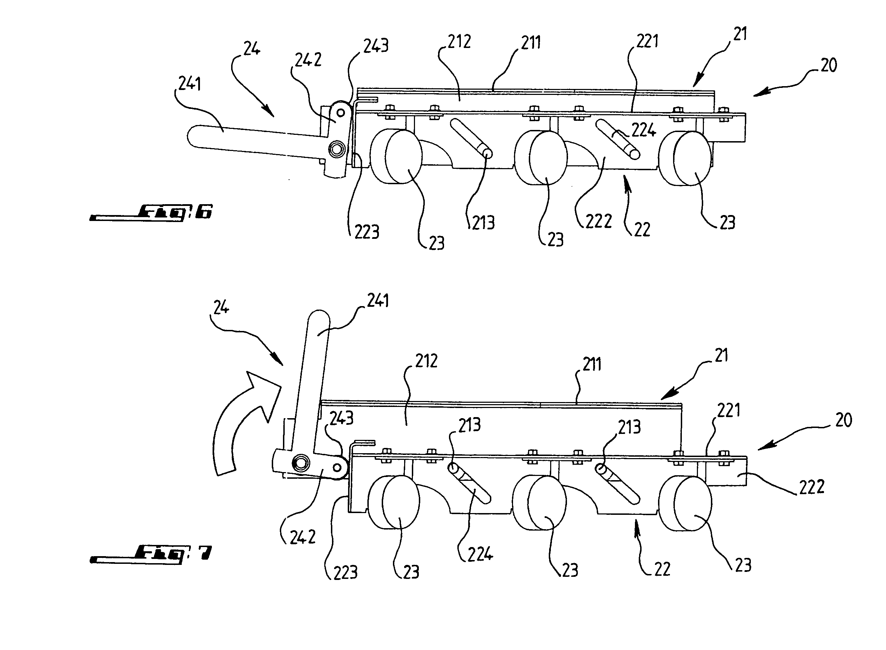

Le dossier 12 est, à partir de sa partie basse, de préférence incliné vers un côté arrière de la structure, comme le montre la figure 3. La seconde aile 132 du profilé transversal 13 s'étend dans le même plan que le dossier 12, et est donc légèrement inclinée vers l'arrière à partir d'un bord inférieur commun avec la première aile 131.

En conséquence, la première aile 131 du profilé transversal 13 est légèrement en pente vers ledit bord inférieur commun.

Les profilés longitudinaux 11 présentent chacun des extrémités longitudinales avant et arrière 111 et 112 opposées coupées latéralement en biseau.

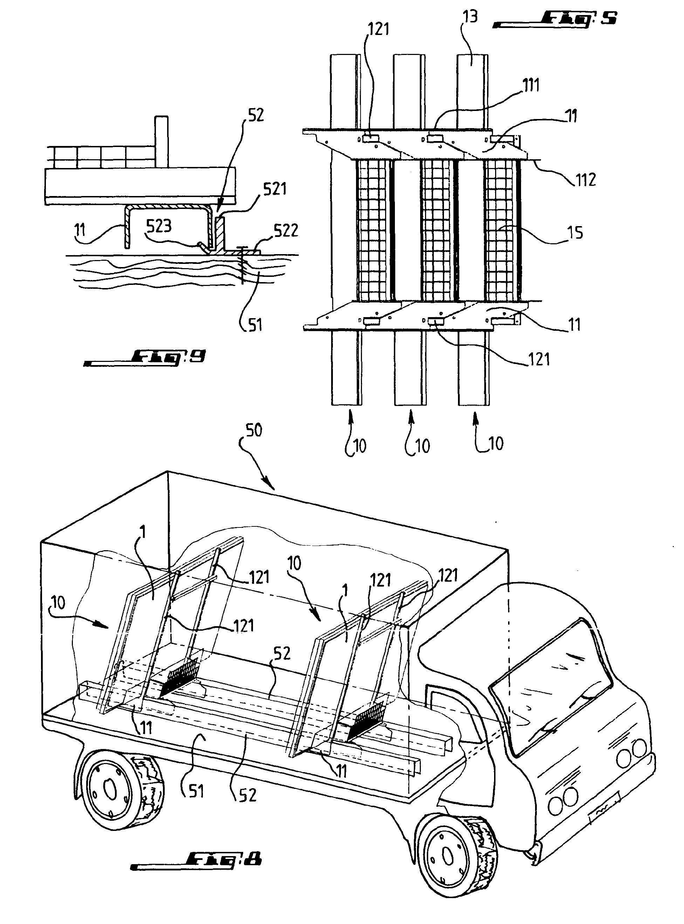

Comme on le voit sur la figure 5, les biseaux sont pratiqués, à l'avant et à l'arrière, sur des côtés mutuellement opposés. L'extrémité avant 111 d'un profilé est coupée du côté latéral faisant face à l'autre profilé. L'extrémité arrière 112 est coupée du côté opposé à l'autre profilé.

Les profilés longitudinaux 11 de deux structures de support 10 placées l'une derrière l'autre s'emboîtent, comme le montre la figure 5, ce dont il résulte que l'encombrement longitudinal de deux structures placés immédiatement l'une derrière l'autre est significativement inférieure à la somme des encombrements longitudinaux de ces deux structures.

La longueur longitudinale d'un profilé longitudinal est typiquement de 600 millimètres environ. La longueur de deux profilés emboîtés est de 950 millimètres environ.

Le dossier 12 comprend deux tubes creux métalliques 121 parallèles, et une barre d'écartement 122 transversale solidaire d'une partie supérieure des tubes 121, creuse et métallique.

Les deux tubes 121 s'étendent dans des plans verticaux longitudinaux parallèles. Ils sont fixés rigidement sur les faces supérieures des profilés longitudinaux par des extrémités inférieures respectives.

Comme on le voit sur les figures 1 et 2, la barre d'écartement 122 comprend deux crochets 124 faisant saillie vers les extrémités inférieures des tubes 121.

La barre d'écartement 122 est fixée d'un côté arrière des tubes 121, et les crochets 124 sont disposés, le long de la barre, immédiatement derrières les tubes 121.

Les crochets 124 de la structure de support sont aptes à venir s'engager dans des extrémités supérieures 123 ouvertes des tubes 121 d'une autre structure de support, quand ladite structure de support, dite supérieure, est empilée sur ladite autre structure de support, dite inférieure.

La structure de support supérieure est ainsi accrochée à la structure de support inférieure par les crochets 124, comme représenté sur la figure 3. Elle repose sur la structure inférieure par ses tubes 121, qui s'étendent contre les tubes 121 de la structure inférieure. De préférence, les tubes 121 sont de section carrée, de façon à augmenter la stabilité de l'ensemble.

La barre d'écartement 122 est placée le long des tubes 121 de telle sorte que la face inférieure des profilés longitudinaux 11 de la structure de support supérieure arrive immédiatement au dessus du profilé transversal 13 de la structure inférieure.

On peut ainsi accrocher les unes au-dessus des autres au moins trois structures de support.

Enfin, on notera qu'un panier 15 est fixé rigidement d'un côté arrière du dossier 12. Ce panier comprend deux joues 151 parallèles fixées aux deux tubes 121 et d'une grille métallique 152 en L s'étendant entre les deux joues 151.

Les joues 151 sont des plaques minces métalliques rectangulaires, s'étendant dans des plans verticaux longitudinaux parallèles. Elles sont fixées par des bords avant respectifs sur les deux faces des tubes 121 en regard l'une de l'autre, et par des bords inférieurs sur les profilés longitudinaux 11. Elles présentent des bords supérieurs respectifs opposés aux bords inférieurs et recourbés vers l'intérieur du panier 15.

La grille 152 comprend une partie horizontale constituant le fond du panier 15, fixée aux profilés longitudinaux, et une partie transversale verticale solidaire de la partie horizontale constituant le côté arrière du panier 15.

La partie transversale verticale s'étend entre des bords arrière des joues 151 opposés aux bords avant de ces joues, et est fixée à ces bords arrière.

Le panier 15 est délimité vers l'avant par la seconde aile 132 du profilé transversal 13.

Les différents éléments de la structure de support sont assemblés par des moyens connus, par exemple par soudage ou par des boulons.

Comme le montre la figure 1, un ouvrant 1 rectangulaire, délimité par deux grands côtés et deux petits côtés, est chargé sur la structure de transport 10 de telle sorte qu'un grand côté repose sur la première aile 131 du profilé transversal 13. L'ouvrant prend appui sur les deux tubes 121 du dossier et est ainsi légèrement incliné vers l'arrière. L'inclinaison de la première aile 131 empêche le grand côté sur lequel repose l'ouvrant de glisser vers l'avant. Cette inclinaison est typiquement de 7°.

Les moyens pour déplacer la structure de support 10 comprennent des manipulateurs à roulettes 20 venant se loger de façon amovible dans les profilés longitudinaux 11, et adoptant chacun sélectivement une configuration abaissée dans laquelle le profilé longitudinal 11 correspondant repose sur le sol, et une configuration soulevée dans laquelle le profilé longitudinal 11 repose sur le manipulateur 20.

De façon avantageuse, les profilés longitudinaux 11 et les manipulateurs 20 présentent des longueurs longitudinales identiques ou proches.

Chaque manipulateur 20 comprend un profilé métallique supérieur 21 en U, un profilé métallique inférieur 22 en U s'étendant dans le profilé supérieur, des roulettes 23 reposant normalement sur le sol et montées pivotantes à l'intérieur du profilé inférieur 22, et des moyens 24 pour déplacer sélectivement le profilé supérieur 21 relativement au profilé inférieur 22 entre une position basse relativement plus proche du sol correspondant à la configuration abaissée du manipulateur et une position haute relativement plus éloignée du sol correspondant à la configuration soulevée.

Le profilé inférieur 22 s'étend longitudinalement. Il présente une face ouverte du côté du sol et comprend un pan central inférieur 221 du côté opposé à la face ouverte, et deux pans latéraux inférieurs opposés 222. Un côté arrière du profilé inférieur 22 est fermé par une plaque 223.

Le pan central inférieur 221 est plat, parallèle au sol. Les pans latéraux inférieurs sont sensiblement verticaux et longitudinaux.

Les roulettes 23 sont liées au pan central 221 par des tiges perpendiculaires au pan central et font partiellement saillie sous le profilé inférieur 22 à travers la face ouverte. Elles sont libres en rotation par rapport au pan central inférieur 221 autour d'un axe correspondant aux dites tiges, et peuvent pivoter sur 360°.

Le profilé supérieur 21 s'étend également longitudinalement et est lui aussi ouvert du côté du sol.

Il comprend un pan central supérieur 211 disposé en regard du pan central inférieur 221, plat et parallèle au pan central inférieur 221, encadré par deux pans latéraux supérieurs 212 disposés parallèlement et en regard des pans latéraux inférieurs 222.

Le profilé supérieur 21 comprend deux tiges transversales 213 fixées chacune à deux extrémités opposées aux pans latéraux supérieurs 212. Ces tiges 212 traversent des fentes obliques 224 ménagées dans les deux pans latéraux inférieurs 222.

Les fentes obliques 224 d'un des deux pans latéraux inférieurs sont disposées en regard des fentes obliques 224 de l'autre pan latéral inférieur.

Ces fentes sont toutes identiques et présentent chacune une première extrémité située relativement plus à l'arrière et plus proche du pan central inférieur 221, et une seconde extrémité opposée à la première située relativement plus à l'avant et relativement plus éloignée du pan central inférieur 221.

Par ailleurs, les moyens pour déplacer le profilé supérieur comprennent un levier coudé 24 monté pivotant autour d'un axe transversal à une extrémité arrière du profilé supérieur 21.

L'axe transversal est monté entre les deux pans latéraux supérieurs 212 formant flasque.

Le levier coudé 24 comprend une branche de commande 241 et une branche d'actionnement 242 solidaire de la branche de commande et perpendiculaire à celle-ci. Le levier pivotant 24 est monté sur l'axe transversal par le coude formé par les branches de commande et d'actionnement.

Le levier coudé 24 comprend encore un galet 243 monté librement rotatif à une extrémité libre de la branche d'actionnement 242 autour d'un axe transversal. Le galet s'appui sur une face extérieure de la plaque arrière 223 du profilé inférieur 22.

Dans la position basse du profilé supérieur 21, la branche de commande 241 s'étend sensiblement horizontalement, vers l'arrière à partir du coude, et la branche d'actionnement s'étend sensiblement vers le haut à partir du coude, immédiatement derrière la plaque arrière 223. Les tiges 213 sont disposées aux secondes extrémités des fentes obliques 224.

Pour déplacer le profilé supérieur de sa position basse à sa position haute, un utilisateur bascule la branche de commande 241 vers le haut, comme le montre la flèche de la figure 7 . Ceci a pour effet de faire pivoter la branche d'actionnement 242 vers l'avant jusqu'à une position proche de l'horizontale, le galet 243 roulant sur la plaque arrière 223.

Le profilé supérieur 21 subit alors un déplacement vers l'arrière relativement au profilé inférieur 22, combiné à un mouvement d'éloignement du sol. Ce dernier mouvement résulte du déplacement des tiges 213 dans les fentes 224, de la seconde extrémité de ces fentes à la première extrméité. Les ergots sont guidés dans les fentes.

En position haute du profilé supérieur 21, on voit sur la figure 7 que la branche d'actionnement 242 est légèrement inclinée vers le bas à partir du coude, et que la branche de commande 241 est légèrement inclinée vers l'avant à partir du coude et vient en butée sur le pan central supérieur 211.

Ainsi, quand la structure de support 10 repose sur le profilé supérieur 21, le poids de la structure tend à faire glisser les tiges 213 vers l'avant, et donc à accentuer la rotation de la branche d'actionnement 242 vers le bas. Ce mouvement est bloqué par la branche de commande 241 venant en butée contre le pan central du profilé supérieur 21.

Le passage de la position haute à la position basse du profilé supérieur 21 se fait par un mouvement inverse, l'utilisateur basculant la branche de commande 241 vers l'arrière.

La branche de commande 241, en position soulevée du manipulateur, s'étend vers le haut à partir de l'axe, pratiquement verticalement et n'augmente pas l'encombrement longitudinal du manipulateur. Elle s'étend vers l'arrière à partir de l'axe en position abaissée du manipulateur.

On notera que chaque manipulateur comprend au moins trois roulettes 23 alignées longitudinalement l'une derrière l'autre.

On comprend bien l'intérêt que le dispositif peut présenter pour le transport d'ouvrants, en particulier d'ouvrants blindés particulièrement lourds.

Le transport de tels ouvrants, par exemple depuis l'usine du fabricant jusqu'à l'entrepôt de stockage du détaillant, comprend les étapes successives suivantes :
1/ chargement d'une porte en position verticale ou proche de la verticale sur une structure de support 10 reposant sur le sol, les manipulateurs 20 étant retirés ;
2/ mise en place de manipulateurs 20 en configuration abaissée sous les profilés longitudinaux 11 ;
3/ passage des manipulateurs de leurs configurations abaissée à leurs configurations soulevée ;
4/ chargement de la structure de support 10 dans un engin de transport, par exemple un camion, en la faisant rouler sur le sol ;
5/ passage des manipulateurs de leurs configurations soulevée à leurs configurations abaissée et retrait des manipulateurs ;
6/ renouvellement des étapes 1/ à 5/ jusqu'à ce que le chargement de l'engin soit terminé ;
7/ déplacement de l'engin de transport jusqu'au point d'arrivée ;
8/ mise en place de manipulateurs en configuration abaissée sous les profilés longitudinaux d'une structure de support chargée dans l'engin de transport ;
9/ passage des manipulateurs de leurs configurations abaissée à leurs configurations soulevée ;
10/ déchargement de la structure de support en la faisant rouler et transport jusqu'au lieu de stockage ;
11/ passage des manipulateurs de leurs configurations soulevée à leurs configurations abaissée et retrait des manipulateurs
12/ renouvellement des étapes 8/ à 11/ jusqu'à ce que le déchargement de l'engin de transport soit terminé.

Les ouvrants sont stockés sur les structures de support chez le détaillant. Elles peuvent ainsi, toujours à l'aide des mêmes manipulateurs, être livrées facilement chez le client. Il n'y a pas à les recharger sur un autre support.

Une fois l'ouvrant livré, la structure de support est avantageusement retournée chez le fabriquant pour être réutilisée. Ce transport retour se fait de façon groupée, les structures étant assemblées comme le montre les figures 3 à 5, c'est-à-dire emboîtées les unes derrière les autre et superposées sur plusieurs niveaux. Les structures d'un niveau supérieur sont accrochées aux structures du niveau immédiatement inférieur à l'aide des crochets 124 décrits plus haut. Il en résulte un gain de place important lors du transport retour.

On notera que l'engin de transport 50 comprend avantageusement un plancher 51 sur lequel des rails parallèles 52 sont rigidement fixés. Les rails 52 coopèrent avec les profilés longitudinaux 11 des structures de support 10 pour maintenir les structures transversalement en position.

Plus précisément, les rails 52 s'étendent dans les profilés longitudinaux 11, ces profilés étant à cheval sur les rails, comme le montre la figure 8. Dans une variante de réalisation, les profilés longitudinaux 11 des structures de support 10 sont bloqués latéralement entre deux rails 52, ce qui permet d'éviter que ces structures glissent transversalement pendant le transport.

Dans encore une autre variante de réalisation représentée sur la figure 9, le rail 52 vu en coupe transversale comprend un montant vertical 521 reposant sur le plancher par une base, une aile horizontale 512 de fixation du rail sur le plancher 51 s'étendant d'un côté du montant vertical 521 et solidaire de la base de ce montant vertical, et une aile oblique 523 s'étendant d'un côté du montant vertical 521 opposé à l'aile horizontale 522 et solidaire de la base de ce montant vertical.

L'aile oblique 523 s'étend vers le haut, en oblique, à partir de la base du montant vertical 521, formant ainsi avec ce montant une rainure longitudinale.

Un côté latéral d'un profilé longitudinal 11 est engagé entre l'aile oblique 523 et le montant vertical 521, et il est entraîné par son propre poids au fond de la rainure.

L'aile 522 est fixée rigidement sur le plancher 51 par des vis ou tout autre dispositif adapté.

On comprend donc bien que le dispositif de transport de l'invention est particulièrement avantageux.

Les roulettes des manipulateurs peuvent pivoter à 360° par rapport au pan central du profilé inférieur. Il est ainsi possible de déplacer le support selon le profil de l'ouvrant et de passer dans des ouvertures étroites, comme des portes.

Une personne seule peut déplacer la structure de support, même si celle-ci est chargée d'un ouvrant particulièrement lourd.

L'encombrement longitudinal est particulièrement faible du fait que l'ouvrant est transporté à la verticale, ou dans une position proche de la verticale, et du fait que les manipulateurs sont de tailles pratiquement égales à celles des profilés longitudinaux. Ils ne dépassent pratiquement pas vers l'arrière par rapport à la structure de support.

Au contraire, quand les ouvrants sont transportés sur des palettes déplacés à l'aide de transpalettes, le transpalette rajoute un encombrement important dans le sens longitudinal.

Par ailleurs, les manipulateurs sont très légers, moins de 10 kilogrammes, et très faciles à déplacer.

Les structures de support sont recyclées, ce qui n'était pas le cas des palettes en bois de l'art antérieur.

Enfin, on notera que le panier 15 peut servir à transporter de petits accessoires accompagnant l'ouvrant, tels que des sachets de vis. Des accessoires de forme allongée, par exemple le cadre d'une porte séparé en trois parties, peuvent être posés transversalement sur les joues 151. La partie verticale de la grille 152 fait saillie vers le haut par rapport aux joues 151 et retient les accessoires vers l'arrière.

## Revendications

1. Dispositif de transport d'ouvrants (1), comprenant une structure (10) de support de l'ouvrant (1) en position verticale ou proche de la verticale, et des moyens amovibles pour déplacer la structure de support (10), **caractérisé en ce que** les moyens pour déplacer la structure de support (10) comprennent au moins un manipulateur à roulettes (20) venant se loger de façon amovible sous la structure de support (10), et adoptant sélectivement une configuration abaissée dans laquelle le profilé longitudinal (11) repose sur le sol, et une configuration soulevée dans laquelle le profilé longitudinal (11) repose sur le manipulateur (20).

2. Dispositif selon la revendication 1, **caractérisé en ce que** la structure de support (10) repose sur des profilés longitudinaux (11) présentant chacun des extrémités longitudinales avant et arrière (111, 112) coupées latéralement en biseau de côtés mutuellement opposés, de telle sorte que les profilés (11) de deux structures de support (10) placées l'une derrière l'autre s'emboîtent.

3. Dispositif selon la revendication 2, **caractérisé en ce que** la structure de support (10) comprend un dossier (12) transversal et vertical ou proche de la verticale, et un profilé transversal (13) en équerre solidaire d'une partie basse du dossier (12) et fixé sur les profilés longitudinaux (11).

4. Dispositif selon la revendication 3, **caractérisé en ce que** le dossier (12) comprend des tubes (121) parallèles, et une barre d'écartement (122) transversale solidaire des tubes (121).

5. Dispositif selon la revendication 4, **caractérisé en ce que** le dossier (12) de la structure de support (10) comprend des crochets (124) aptes à venir s'engager dans des extrémités supérieures ouvertes (123) des tubes (121) d'une autre structure de support (10), quand ladite structure de support est empilée sur ladite autre structure de support.

6. Dispositif selon l'une quelconque des revendications 2 à 5, **caractérisé en ce que** le ou les manipulateurs à roulettes (20) viennent se loger dans les profilés longitudinaux (11).

7. Dispositif selon la revendication 6, **caractérisé en ce que** les profilés longitudinaux (11) et les manipulateurs (20) présentent des longueurs longitudinales proches.

8. Dispositif selon la revendication 6 ou 7, **caractérisé en ce que** chaque manipulateur (20) comprend un profilé supérieur (21) en U, un profilé inférieur (22) en U s'étendant dans le profilé supérieur (21), des roulettes (23) reposant sur le sol et montées pivotantes à l'intérieur du profilé inférieur (22), et des moyens pour déplacer sélectivement le profilé supérieur (21) relativement au profilé inférieur (22) entre une position basse relativement plus proche du sol correspondant à la configuration abaissée et une position haute relativement plus éloignée du sol correspondant à la configuration soulevée.

9. Procédé de transport de portes blindées à l'aide du dispositif des revendications 6 à 8, mettant en jeu les étapes successives suivantes :
1/ chargement d'une porte en position verticale ou proche de la verticale sur une structure de support (10) reposant sur le sol, les manipulateurs (20) étant retirés ;
2/ mise en place de manipulateurs (20) sous les profilés longitudinaux (11) ;
3/ chargement de la structure de support (20) dans un engin de transport (50) en la faisant rouler sur le sol et retrait des manipulateurs (20) ;
4/ renouvellement des étapes 1/ à 3/ jusqu'à ce que le chargement de l'engin soit terminé ;
5/ déplacement de l'engin de transport (50) ;
6/ mise en place de manipulateurs (20) sous les profilés longitudinaux (11) d'une structure de support (10) ;
7/ déchargement de la structure de support (10) en la faisant rouler et retrait des manipulateurs (20) ;
8/ renouvellement des étapes 6/ et 7/ jusqu'à ce que le déchargement de l'engin de transport (50) soit terminé.

10. Procédé selon la revendication 9, **caractérisé en ce que** l'engin de transport (50) comprend un plancher (51) sur lesquels des rails (52) sont fixés, les rails (52) coopérant avec les profilés longitudinaux (11) des structures de support (10) pour maintenir les structures transversalement en position.

11. Dispositif selon la revendication 8, **caractérisé en ce que** les moyens pour déplacer sélectivement le profilé supérieur (21) comprennent une branche de commande (241) pivotante autour d'un axe transversal, cette branche s'étendant vers le haut à partir de l'axe en configuration soulevée du manipulateur (20) et vers l'arrière à partir de l'axe en configuration abaissée du manipulateur (20).
